(19) **Europäisches Patentamt / European Patent Office / Office européen des brevets**

(11) **EP 4 195 746 B1**

(12) # EUROPEAN PATENT SPECIFICATION

(45) Date of publication and mention
of the grant of the patent:
**06.05.2026 Bulletin 2026/19**

(21) Application number: **21852839.6**

(22) Date of filing: **06.08.2021**

(51) International Patent Classification (IPC):
**H04W 74/0808** (2024.01)    **H04W 76/28** (2018.01)
**H04W 92/18** (2009.01)

(52) Cooperative Patent Classification (CPC):
**H04W 74/0808; H04W 76/28; H04W 92/18;
Y02D 30/70**

(86) International application number:
**PCT/CN2021/111301**

(87) International publication number:
**WO 2022/028605 (10.02.2022 Gazette 2022/06)**

(54) **DETECTION WINDOW ACQUISITION METHOD AND APPARATUS, AND TERMINAL**

ERFASSUNGSVERFAHREN UND -VORRICHTUNG FÜR DETEKTIONSFENSTER SOWIE
ENDGERÄT

PROCÉDÉ ET APPAREIL D'ACQUISITION DE FENÊTRE DE DÉTECTION, ET TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2020 CN 202010791656**

(43) Date of publication of application:
**14.06.2023 Bulletin 2023/24**

(60) Divisional application:
**26168268.6**

(73) Proprietor: **Vivo Mobile Communication Co., Ltd.
Dongguan, Guangdong 523863 (CN)**

(72) Inventors:
• **PENG, Shuyan
Dongguan, Guangdong 523863 (CN)**
• **JI, Zichao
Dongguan, Guangdong 523863 (CN)**

(74) Representative: **Winter, Brandl - Partnerschaft
mbB
Alois-Steinecker-Straße 22
85354 Freising (DE)**

(56) References cited:
WO-A1-2018/030825    WO-A1-2018/058963
WO-A1-2020/088678    CN-A- 107 734 655
CN-A- 108 112 036    CN-A- 111 246 426
US-A1- 2020 029 245    US-A1- 2021 258 921

• **INTEL CORPORATION: "Design of Resource
Allocation Mode-2 for NR V2X Sidelink
Communication", vol. RAN WG1, no. Reno, USA;
20191118 - 20191122, 9 November 2019
(2019-11-09), XP051823282, Retrieved from the
Internet <URL:https://ftp.3gpp.org/tsg_ran/
WG1_RL1/TSGR1_99/Docs/R1-1912205.zip
R1-1912205 Intel - V2X_SL_M2.docx> [retrieved
on 20191109]**
• **SAMSUNG: "On Mode 2 for NR Sidelink", vol.
RAN WG1, no. e-Meeting; 20200420 - 20200430,
10 April 2020 (2020-04-10), XP051873438,
Retrieved from the Internet <URL:https://
ftp.3gpp.org/tsg_ran/WG1_RL1/TSGR1_100b_e/
Docs/R1-2002126.zip R1-2002126.docx>
[retrieved on 20200410]**

- INTEL CORPORATION: "Remaining details of partial sensing for P2V communication", 3GPP DRAFT; R1-1702141 INTEL - PUE SENSING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20170213 - 20170217, 12 February 2017 (2017-02-12), Mobile Competence Centre ; 650, route des Lucioles ; F-06921 Sophia-Antipolis Cedex ; France
, XP051209300

**Description**

**TECHNICAL FIELD**

This application belongs to the field of communications technologies, and specifically relates to a method and a terminal for obtaining a sensing window, and a computer readable storage medium.

**BACKGROUND**

A long term evolution (Long Term Evolution, LTE) system supports sidelink (sidelink) transmission, that is, data transmission directly performed between terminals (also known as User Equipment (UE)) on a physical layer. An LTE sidelink communicates based on broadcast. Although the LTE sidelink can be used for supporting basic security communication of vehicle to everything (vehicle to everything, V2X), it is not suitable for other more advanced V2X services. A 5G new radio (New Radio, NR) system supports more advanced sidelink transmission designs, such as unicast, multicast, groupcast, and the like, so as to support a more comprehensive service type.

In LTE, partial sensing is mainly designed to save power, and to support communication between a pedestrian and a vehicle (Pedestrian to Vehicle, P2V). The terminal supports two modes of resource selection methods. In one method, resource selection is random. In another method, partial sensing is firstly performed, a resource is selected based on a result of the partial sensing, and semi-static resource reservation is performed. Which mode of resource selection methods is selected by the terminal is configured by radio resource control (Radio Resource Control, RRC). When the RRC is configured to support two modes of resource selection, the terminal decides which mode of resource selection is used. WO 2020/088678 A1 discloses a communication method, which includes the steps: a first terminal device determines a first parameter, where the first parameter is used to indicate a parameter of a sensing window, a parameter of a resource selection window, and/or a parameter of a first time window, and the first time window includes the sensing window and the resource selection window. The first terminal device determines a first resource pool from at least one resource pool based on the first parameter. The first terminal device selects a first resource from the first resource pool. The first terminal device transmits sidelink information on the first resource. US 2020/029245 A1 discloses that a vehicle UE (V-UE) or pedestrian UE (P-UE) can configure resources independently for communication with other V-UEs/P-UEs to avoid collision and ensure safety. The UEs can operate to independently monitor and configure their own resources via partial sensing window configurations that can dynamically configured to perform resource (re)selection in response to a resource reselection trigger. An exclusion of detected resources that are reduced or occupied by other devices can be performed, and a resource candidate set generated to select resource candidates for long term evolution (LTE) vehicular communications. UE partial sensing mechanisms and congestion control can be enhanced for these communications via efficient power control and signaling reliance for vehicle communication quality, as well as pedestrian safety. WO 2018/030825 A1 discloses a method for determining a resource of a communication by a terminal in a wireless communication system, the method comprising: receiving, from a base station, information on a minimum number of subframes for monitoring; determining a number of a plurality of subframes to be monitored based on the minimum number of subframes; identifying the plurality of subframes to be monitored for a sidelink transmission; and transmitting, to the base station, information indicating a set of subframes for the sidelink transmission selected based on the plurality of subframes.

In a process of implementing this application, the inventor finds that there are at least the following problems in the prior art:

In the LTE sidelink, a stride of partial sensing in a sidelink resource pool is fixed at 100 ms. For periodicity configuration in the LTE, a sensing window obtained by k*100 ms can basically sense a resource reservation condition of other UE in the resource pool. However, in NR, an optional value of a sensing periodicity is irregular. If the sensing window is obtained in a stride of 100 ms, resource reservation conditions of other terminals (for example, a terminal whose reservation periodicity value is [1:99]) in a selection window cannot be sensed, resulting in collision between a selected resource and a resource reserved by another terminal when the sensing terminal selects resources.

**SUMMARY**

The invention is set out by the appended set of claims. A purpose of embodiments of this application is to provide a method, a terminal and a computer readable storage medium as defined in the appended set of claims, which can solve a problem that a method for obtaining a sensing window in the prior art is not applicable to a 5G or a subsequent communication system.

## BRIEF DESCRIPTION OF THE DRAWINGS

FIG. 1 is a flowchart of steps of a method for obtaining a sensing window according to an embodiment of this application.

FIG. 2 is a schematic diagram of parameters related to resource sensing and resource selection in the method for obtaining a sensing window according to an embodiment of this application.

FIG. 3 is a schematic structural diagram of an apparatus for obtaining a sensing window according to an embodiment of this application not covered by the claims.

FIG. 4 is a first schematic structural diagram of a terminal according to an embodiment of this application.

FIG. 5 is a second schematic structural diagram of a terminal according to an embodiment of this application.

## DETAILED DESCRIPTION

The following clearly and completely describes the technical solutions in the embodiments of this application with reference to the accompanying drawings in the embodiments of this application. Apparently, the described embodiments are some rather than all of the embodiments of this application.

The terms such as "first" and "second" in the specification and the claims of this application are intended to distinguish between similar objects, but are not used for describing a specific sequence or a chronological order. It is to be understood that the data used in such a way is interchangeable in proper circumstances, so that the embodiments of this application can be implemented in other sequences than the sequence illustrated or described herein. In addition, objects distinguished by "first", "second", and the like are usually of one type, and a quantity of the objects is not limited. For example, a first object may be one or more than one. In addition, "and/or" in the specification and claims represents at least one of connected objects. The character "/" generally indicates an "or" relationship between the associated objects.

It is worth noting that technologies described in the embodiments of this application are not limited to a long term evolution (Long Term Evolution, LTE)/LTE-advanced (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technologies may be used for not only the foregoing systems and radio technologies, but also other systems and radio technologies. However, the following description describes a new radio (New Radio, NR) system for a purpose of example, and an NR term is used in many parts of the following description. These technologies are also applicable to an application other than an NR system application, such as a 6th generation (6th Generation, 6G) communication system.

In the embodiments of this application, a terminal may also be referred to as a terminal device or user equipment (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), pedestrian user equipment (PUE), and the like. The wearable device includes: a bracelet, a headphone, glasses, and the like. It needs to be noted that, the embodiments of this application do not limit a specific type of the terminal.

The following describes the method and apparatus for obtaining a sensing window, and the terminal provided in the embodiments of this application in detail through specific embodiments and application scenarios thereof with reference to the accompanying drawings.

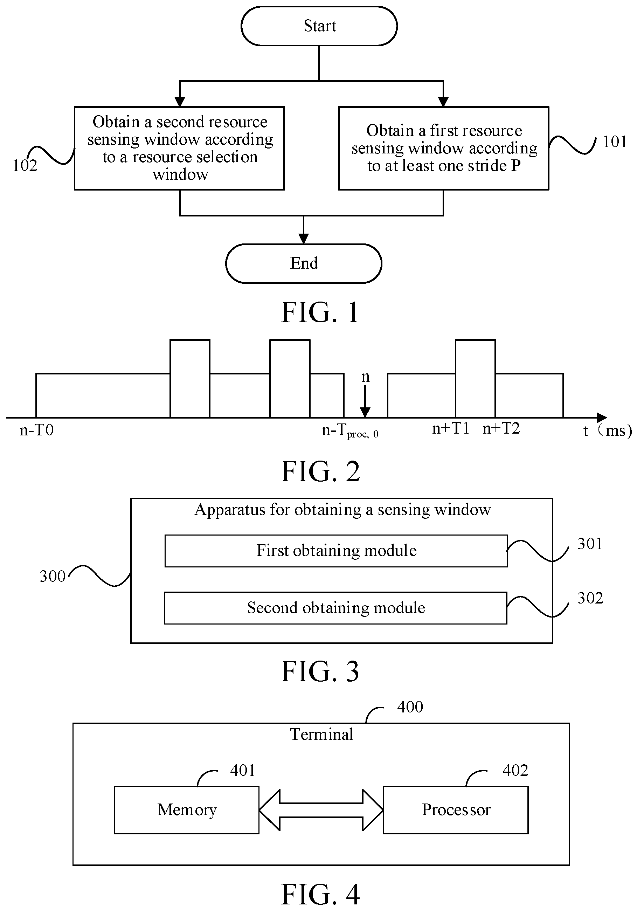

As shown in FIG. 1, the embodiments of this application further provide a method for obtaining a sensing window, applied to a terminal, the method including the following:

Step 101. Obtain a first resource sensing window according to at least one stride P, and optionally

Step 102. Obtain a second resource sensing window according to a resource selection window.

The first resource sensing window may be one or more windows, and the second resource sensing window may also be one or more windows. Optionally, step 101 is specifically: obtaining the first resource sensing window according to the at least one stride P and a resource selection window.

As an optional embodiment, in a case that a first condition is met, the second resource sensing window is obtained through step 101, otherwise, the first resource sensing window is obtained through step 102, where the first condition includes at least one of the following:

a periodicity value configured by the terminal is less than a first periodicity value threshold;

a periodicity value configured in the resource pool includes one or more non-zero periodicity values less than a second periodicity value threshold;

a periodicity value configured in the resource pool is not enabled; or

a periodicity value configured by the terminal is 0.

It needs to be noted that, in a case that the periodicity value configured in the resource pool is not enabled, another terminal in the resource pool is in aperiodic transmission. The second resource sensing window can be used for sensing according to the resource selection window, and the second resource sensing window may be a dynamic resource selection window. Alternatively, when the periodicity value configured by the terminal is 0, that is, the terminal is in the aperiodic transmission, the second resource sensing window can be used for sensing according to the resource selection window.

At least one of the first periodicity value threshold and the second periodicity value threshold is at least one of the following:

a predefined threshold;

a pre-configured threshold;

a configured threshold; or

a threshold related to the periodicity value configured in the resource pool.

Pre-configuration or configuration may be pre-configured or configured by a network, or may further be pre-configured or configured by a terminal. Alternatively, the first periodicity value threshold and/or the second periodicity value threshold are values indicated by a network or terminal. The configuration may be specifically a high-layer signaling configuration, and indication may be indicated by a network or terminal through physical layer signaling. For example, it may be configured/indicated by RRC signaling, media access control control element (MAC CE) signaling, sidelink control information SCI signaling, PC5-RRC signaling, SCI, feedback information, physical sidelink feedback channel (PSFCH), and the like.

As another optional embodiment, the method further includes at least one of the following:

determining the stride P according to a periodicity value configured in a resource pool;

determining the stride P according to a periodicity value configured by a terminal;

determining the stride P according to a periodicity value of sidelink discontinuous reception DRX; or

determining the stride P according to predefinition, or pre-configuration, or configuration. Pre-configuration or configuration may be configured or pre-configured by a network, or may further be pre-configured or configured by a terminal. For example, it may be configured/indicated by RRC signaling, MAC CE signaling, SCI signaling, PC5-RRC signaling, SCI, feedback information, PSFCH, and the like. It needs to be noted that, if the stride P is a pre-configured value or a configured value, the pre-configured value or the configured value is a parameter configured in each resource pool. For example, the pre-configured value or the configured value may be a subset of the periodicity value configured in the resource pool.

A value of the stride P is less than or equal to a first value, which is beneficial to reduce a quantity of terminal sensing windows and facilitate terminal capability. That is, the stride P may be one value or a plurality of values (e.g. P1, P2, ..., Pm). The first value is a predefined value, or a pre-configured value, or a configured value, or a value determined according to a terminal capability, or a value determined according to quality of service.

It needs to be noted that, pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

In a case that the first value is a value determined according to quality of service QoS, the first value may be configured according to each QoS. For example, each QoS level is associated with a corresponding first value, and if service transmission corresponds to one of the QoS, a corresponding first value can be found according to a configuration parameter of the QoS. Likewise, in a case that the first value is a value determined according to a terminal capability, the first value may be configured according to each terminal capability. For example, for first values associated with and corresponding to different terminal capabilities, if a terminal capability of a current terminal is a certain capability, a corresponding first value may be found according to the capability.

Optionally, the first value is a value configured in the resource pool, or a value related to a configuration parameter of the terminal, or a value related to configuration of a logical channel; or the first value is a value related to configuration of a logical channel group. For example, the first value may be configured based on each resource pool. For example, there is one or more parameter configurations of first values ($P_{budget}$) under an IE corresponding to the resource pool.

As another optional embodiment, the determining the stride P according to a periodicity value configured in a resource pool includes at least one of the following:

determining the stride P according to a least common multiple of some or all the periodicity values configured in the resource pool;

determining the stride P according to a greatest common divisor of some or all the periodicity values configured in the resource pool; or

determining the stride P corresponding to the periodicity value configured in the resource pool according to a stride value corresponding to a predefined or pre-configured or configured periodicity value range.

Example 1

As shown in Table 1, a stride value corresponding to at least one periodicity value range is predefined or pre-configured or configured, and the stride P is obtained according to the periodicity value configured in the resource pool.

Table 1

| Periodi city value | [1:20] | [21:40] | [41:60] | [61:80] | [81:99] | [100:1000] |
|---|---|---|---|---|---|---|
| P | 10 | 30 | 50 | 70 | 90 | 100 |

If a resource pool 1 (RP1) is configured to support periodic reservation and is configured with 12 periodicity values, which are respectively [0, 21, 43, 79, 100, 200, 300, 400, 500, 700, 800, 1000]. According to the periodicity value configured in the resource pool and Table 1, it can be seen that a stride P1 corresponding to a configuration periodicity value 21 is equal to 30; a stride P2 corresponding to a periodicity value 43 is equal to 50; a stride P3 corresponding to a periodicity value 79 is equal to 70; and a stride P4 corresponding to periodicity values 100, 200, 300, 400, 500, 700, 800, 1000 is equal to 100. If a terminal in the resource pool supports partial sensing, the terminal obtains a position of a sensing window by using the stride P1=30, the stride P2=50, the stride P3=70, and the stride P4=100.

As another optional embodiment, if there are M1 periodicity values (non-zero periodicity values) meeting a first rule in the periodicity value configured in the resource pool, where M1 is a predefined or pre-configured or configured value. The determining the stride P according to a periodicity value configured in a resource pool includes at least one of the following:

determining that the stride P includes 100, where 100 may cover a sensing range of a periodicity value of 100*k, and can reduce a quantity of strides P, and k is a positive integer;

determining that the stride P includes a greatest common divisor of some or all the periodicity values meeting the first rule, for example, a greatest common divisor of 100*k1, where k1 is a positive integer, and if k1 is even, the stride P is at least 200; or

determining that the stride P includes a least common multiple of some or all the periodicity values meeting the first rule, for example, a least common multiple of 100*k2, where k2 is a positive integer.

Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

The periodicity values meeting the first rule include at least one of the following:

periodicity values corresponding to multiples of 100; or
periodicity values corresponding to multiples of 10.

As another optional embodiment, if there are M2 periodicity values meeting a second rule in the periodicity value configured in the resource pool, where M2 is a predefined or pre-configured or configured value. The determining the stride P according to a periodicity value configured in a resource pool includes at least one of the following:

determining that the stride P includes a least common multiple of some or all the periodicity values meeting the second rule, for example, if 10, 20, 40, and 80 are configured, the stride P is 80;

determining that the stride P includes a greatest common divisor of some or all the periodicity values meeting the second rule, for example, if 10, 20, 40, and 80 are configured, the stride P is 10;
determining that the stride P includes a least common multiple of quantized values of some or all the periodicity values meeting the second rule, for example, a periodicity value configured as 79 is quantized to 80, and then common multiple processing is performed on the periodicity value, and a resource sensing window obtained based on the stride P of 80 is considered that part of the resource sensing window can cover the periodicity value of 79; or
determining that the stride P includes a greatest common divisor of quantized values of some or all the periodicity values meeting the second rule, for example, a periodicity value configured as 69 is quantized to 70, and then common divisor processing is performed on the periodicity value, and a resource sensing window obtained based on the stride P of 70 is considered that part of the resource sensing window can cover the periodicity value of 69.

Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

The periodicity values meeting the second rule include at least one of the following:

periodicity values less than 100; or
periodicity values that are not a multiple of 10.

Optionally, in the foregoing embodiments of this application, quantization granularity for some or all the periodicity values is a predefined or pre-configured or configured value. A quantization rule of the quantized values of some or all the periodicity values includes at least one of the following: rounding up; rounding down; rounding; or a predefined or pre-configured or configured rule.

For example, if the quantization granularity is 10 ms and quantization is performed through rounding up, a quantization result is: ceil (period/10), where the ceil is rounded up.

It needs to be noted that, if there is both the periodicity value meeting the first rule and the periodicity value meeting the second rule in the configuration periodicity value of the resource pool, the stride P includes at least one of the following:

determining that the stride P includes 100;
determining that the stride P includes a greatest common divisor of some or all the periodicity values meeting the first rule;
determining that the stride P includes a least common multiple of some or all the periodicity values meeting the first rule;
determining that the stride P includes a least common multiple of some or all the periodicity values meeting the second rule;
determining that the stride P includes a greatest common divisor of some or all the periodicity values meeting the second rule;
determining that the stride P includes a least common multiple of quantized values of some or all the periodicity values meeting the second rule; or
determining that the stride P includes a greatest common divisor of quantized values of some or all the periodicity values meeting the second rule.

As another optional embodiment, values of the strides P are equal to some or all values of non-zero periodicity values in the resource pool. For example, in a case that the values of the strides P are equal to all values of non-zero periodicity values in the resource pool, it is equivalent to that all the periodicity values configured in the resource pool are sensed once.

As another optional embodiment, the determining the stride P according to a periodicity value configured by a terminal includes:
determining that the stride P is equal to the periodicity value configured by the terminal.

Alternatively, the determining the stride P according to a periodicity value of sidelink discontinuous reception DRX includes:
determining that the stride P is equal to the periodicity value of the sidelink DRX.

As an optional embodiment, in a case that the first resource sensing window is obtained according to at least one stride P, the method further includes at least one of the following:

determining a quantity of the first resource sensing windows, where the quantity includes: an optional quantity of the first resource sensing windows, and an actual quantity of the first resource sensing windows; or

determining positions of the first resource sensing windows.

As shown in FIG. 2, the optional quantity of the first resource sensing windows is related to at least one of the following parameters:

a predefined or pre-configured or configured quantity, for example, a configured quantity indicated through bitmap, where pre-configuration or configuration may be configured or pre-configured by a network, or may further be pre-configured or configured by a terminal, and configuration specifically refers to high-layer signaling configuration, for example, it may be configured/indicated by RRC signaling, MAC CE signaling, SCI signaling, PC5-RRC signaling, SCI, feedback information, PSFCH, and the like;

a time length T1 between a starting position of the resource selection window and a resource selection trigger moment;

a time length $T1_{min}$ between an optional starting position of the resource selection window and a resource selection trigger moment;

a time length T2 between an ending position of the resource selection window and a resource selection trigger moment n;

a time length $T2_{max}$ between an optional starting position of the resource selection window and a resource selection trigger moment;

a time length T0 between a starting position of an optional resource sensing window and a resource selection trigger moment;

predefined or pre-configured first processing time $T_{proc,0}^{SL}$ ;

predefined or pre-configured second processing time $T_{proc,1}^{SL}$ ; or

the stride P.

The optional quantity of the first resource sensing windows (optionally, the optional quantity is a maximum quantity of the first resource sensing windows) includes at least one of the following:

$$(T1+T0)/P;$$

$$(T1_{min}+T0)/P;$$

$$(T2+T0)/P;$$

$$(T2_{max}+T0)/P$$

$$T0/P;$$

$$(T0-T_{proc,0}^{SL})/P;$$

$$(T0+T_{proc,1}^{SL} - 100)/P;$$

$$(T1+T0-100)/P;$$

$$(T1_{min}+T0-100)/P;$$

$$(T2+T0-100)/P;$$

$$(T2_{max}+T0-100)/P$$

$$(T0-100)/P;$$

$$(T0-T_{proc,0}^{SL} - 100)/P;$$

$$(T0+T_{proc,1}^{SL} - 100)/P;$$

or

a predefined or pre-configured or configured quantity.

For example, the optional quantity of the first resource sensing windows is determined through (T1+T0)/P; or the optional quantity of resource sensing windows is determined through T0/P; or the optional quantity of the first resource sensing windows is determined through $(T0-T_{proc,0}^{SL})/P$; or the optional quantity of the first resource sensing windows is determined through the predefined/pre-configured/configured parameter.

As an optional embodiment, the determining positions of the first resource sensing windows includes: determining the positions of the first resource sensing windows as: some or all positions meeting Y-j*P within a preset range, where Y is a resource in a resource selection window of the terminal, j is a value obtained according to a predefined or pre-configured or configured parameter, and P is the stride. For example, a value of j may be indicated through bitmap. Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

The preset range includes at least one of the following, as shown in FIG. 2:

a range ([n-T0, n+T1]) between a starting position of an optional resource sensing window and a starting position of the resource selection window;

a range ([n-T0+100, n+T1]) starting backward at a preset time from a starting position of an optional resource sensing window to a starting position of the resource selection window;

a range ([n-T0, n-$T_{proc,0}$]) between a starting position of an optional resource sensing window and an ending position of the optional resource sensing window;

a range ([n-T0+100, n-$T_{proc,0}$]) starting backward from a starting position of an optional resource sensing window for a preset time to an ending position of the optional resource sensing window;

a range ([n-T0, n]) between a starting position of the resource sensing window and a resource selection trigger moment;

a range ([n-T0+100, n]) starting backward at a preset time from a starting position of the resource sensing window to a resource selection trigger moment;

a range between an optional starting position of the resource sensing window and a resource selection trigger moment;

a range starting backward from an optional starting position of the resource sensing window for a preset time to a resource selection trigger moment;

a range between an ending position of the resource sensing window and a resource selection trigger moment;

a range starting backward from an ending position of the resource sensing window for a preset time to a resource selection trigger moment;

a range between an optional ending position of the resource sensing window and a resource selection trigger moment;

a range starting backward from an optional ending position of the resource sensing window for a preset time to a resource selection trigger moment;

a range ([n+T1-T0, n+T1]) starting forward from a starting position of the resource selection window for a time length T0 to the starting position of the resource selection window; or

a range ([n+T1-T0+100, n+T1]) starting forward from a starting position of the resource selection window for a time length T0 and then backward for a preset time to the starting position of the resource selection window.

The part of positions is at least one of the following:

first N positions;

last N positions;
first N positions after N-T0+100; or
positions indicated by a bitmap bitmap.

N is an actual quantity of the first resource sensing windows, or a predefined or pre-configured or configured value, or a value determined according to configuration information (for example, obtained according to bitmap indication). Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

Continuing the foregoing example, the method according to the embodiments of this application further includes:

performing resource exclusion with a first periodicity value or a first stride as a periodicity value according to at least one of a sensing result in the first resource sensing window or a sensing result in the second resource sensing window, where the first periodicity value is a periodicity value carried in sidelink control information received by the terminal in a corresponding resource sensing window; and the first stride is a stride corresponding to the periodicity value carried in the sidelink control information received by the terminal in the corresponding resource sensing window.

A value of a quantity of excluded resources is Q; where Q is one of the following:

Q is equal to 1;
Q is equal to ceil (stride P/periodicity value T), where the ceil is a rounding-up operation, and the periodicity value T is not 0;
Q is equal to floor (stride P/periodicity value T), where the floor is a rounding-down operation, and the periodicity value T is not 0, that is, only resources within one stride are excluded; or
Q is equal to round (stride P/periodicity value T), where the round is a rounding operation, the periodicity value T is not 0, and
the stride P is a sensing stride corresponding to the periodicity value T. The stride P may be a corresponding minimum sensing stride/maximum sensing stride/average sensing stride in the resource pool.

It needs to be noted that, the Q resources excluded above may be continuous resources or discontinuous resources. This is not specifically limited herein.

A starting moment of the resource exclusion includes:

a moment when the sidelink control information is received; and
a starting moment of the resource selection window of the terminal.

In summary, in the embodiments of this application, a first resource sensing window is obtained through at least one stride P, and/or a second resource sensing window is obtained according to a resource selection window, so that a purpose of balancing power consumption and sensing performance can be achieved, a position of a time domain resource to be sensed by a terminal can be reduced, and a purpose of saving power can also be achieved.

In order to more clearly describe the method for obtaining a sensing window provided in the embodiments of this application, the following describes with reference to several examples.

Example 2

It is predefined that a stride value P=100 when there is a periodicity value of 100*k in a periodicity value configured in a resource pool. If there is a periodicity value belonging to [1: 99], a least common multiple is taken according to a quantized value of the periodicity value, and is another stride value.

If a resource pool 1 (RP1) is configured to support periodic reservation and is configured with 12 periodicity values, which are respectively [0, 20, 40, 80, 100, 200, 300, 400, 500, 700, 800, 1000]. In configuration of the resource pool, if there is configuration with periodicity values of 100, 200, 300, 400, 500, 700, 800 and 1000, one value of the stride P is 100. There is configuration with periodicity values of 20, 40 and 80, a least common multiple corresponding to the periodicity value is 80, and another value of the stride P is 80.

If partial sensing is supported in the resource pool, when the terminal performs partial sensing in the resource pool, a position of a resource sensing window is obtained by using a stride P1=80 and a stride P2=100.

Example 3

It is predefined that a terminal obtains a sensing stride according to a quantization result of a configuration periodicity value in a resource pool. It is predefined that quantization granularity is 10 ms, and a quantization method is rounded to obtain a quantized value. It is predefined that when there is a periodicity value of 100*k, a stride value P=100. If there is a periodicity value belonging to [1: 99], a least common multiple is taken according to a quantized value of the periodicity value, and is another stride value.

If a resource pool 1 (RP1) is configured to support periodic reservation and is configured with 12 periodicity values, which are respectively [0, 21, 43, 79, 100, 200, 300, 400, 500, 700, 800, 1000]. In configuration of the resource pool, if there is configuration with periodicity values of 100, 200, 300, 400, 500, 700, 800 and 1000, one value of the stride P is 100. If there is configuration with periodicity values of 21, 43, 79, quantized values are determined to be 20, 40, and 80 according to a predefined quantization rule. If a least common multiple corresponding to the periodicity value is 80, another value of the stride P is 80.

If a terminal in the resource pool supports partial sensing, the terminal obtains a position of a resource sensing window by using a stride P1=80 and a stride P2=100.

Example 4

It is predefined that if there is a non-zero periodicity value configured in a resource pool less than a periodicity value threshold configured in a high layer, a terminal uses a second resource sensing window to sense a resource in the resource pool. Otherwise, the terminal obtains a stride P according to a periodicity value configured in the resource pool, and determines a resource sensing window according to the stride P to perform resource sensing.

If a resource pool 1 (RP1) is configured to support periodic reservation and is configured with 12 periodicity values, which are respectively [0, 20, 40, 80, 100, 200, 300, 400, 500, 700, 800, 1000]. The periodicity value threshold configured in the high layer Tthreshold = 30.

In the resource pool, there is a non-zero periodicity value 20 < a periodicity value threshold 30, so in the resource pool, the terminal uses a dynamic resource sensing window to sense.

It needs to be noted that, the method for obtaining a sensing window provided in the embodiments of this application may be performed by an apparatus for obtaining a sensing window, or a control module configured to perform the method for obtaining a sensing window in the apparatus for obtaining a sensing window. In the embodiments of this application, an example in which the method for obtaining a sensing window is performed by the apparatus for obtaining a sensing window is used for describing the apparatus for obtaining a sensing window provided in the embodiments of this application.

As shown in FIG. 3, the embodiments of this application not covered by the claims further provide an apparatus 300 for obtaining a sensing window, applied to a terminal, the apparatus including at least one of the following:

a first obtaining module 301, configured to obtain a first resource sensing window according to at least one stride P; or
a second obtaining module 302, configured to obtain a second resource sensing window according to a resource selection window.

As an optional embodiment, the apparatus further includes at least one of the following:

a first determining module, configured to determine the stride P according to a periodicity value configured in a resource pool;
a second determining module, configured to determine the stride P according to a periodicity value configured by a terminal;
a third determining module, configured to determine the stride P according to a periodicity value of sidelink discontinuous reception DRX; or
a fourth determining module, configured to determine the stride P according to predefinition, or pre-configuration, or configuration.

As an optional embodiment, a value of the stride P is less than or equal to a first value;
where the first value is a predefined value, or a pre-configured value, or a configured value, or a value determined according to a terminal capability, or a value determined according to quality of service.

As an optional embodiment, the first value is a value corresponding to a configuration parameter of the resource pool, or a value corresponding to a configuration parameter of the terminal, or a value corresponding to a configuration parameter of a logical channel; or a value corresponding to a configuration parameter of a logical channel group.

As an optional embodiment, the first determining module includes at least one of the following:

a first determining submodule, configured to determine the stride P according to a least common multiple of some or all the periodicity values configured in the resource pool;

a second determining submodule, configured to determine the stride P according to a greatest common divisor of some or all the periodicity values configured in the resource pool; or

a third determining submodule, configured to determine the stride P corresponding to the periodicity value configured in the resource pool according to a stride value corresponding to a predefined or pre-configured or configured periodicity value range.

As an optional embodiment, if there are M1 periodicity values meeting a first rule in the periodicity values configured in the resource pool, where M1 is a predefined or pre-configured or configured value. The first determining module includes at least one of the following:

a fourth determining submodule, configured to determine that the stride P includes 100;

a fifth determining submodule, configured to determine that the stride P includes a greatest common divisor of some or all the periodicity values meeting the first rule; or

a sixth determining submodule, configured to determine that the stride P includes a least common multiple of some or all the periodicity values meeting the first rule.

As an optional embodiment, the periodicity values meeting the first rule include at least one of the following:

periodicity values corresponding to multiples of 100; or
periodicity values corresponding to multiples of 10.

As an optional embodiment, if there are M2 periodicity values meeting a second rule in the periodicity value configured in the resource pool, where M2 is a predefined or pre-configured or configured value. The first determining module includes at least one of the following:

a seventh determining submodule, configured to determine that the stride P includes a least common multiple of some or all the periodicity values meeting the second rule;

an eighth determining submodule, configured to determine that the stride P includes a greatest common divisor of some or all the periodicity values meeting the second rule;

a ninth determining submodule, configured to determine that the stride P includes a least common multiple of quantized values of some or all the periodicity values meeting the second rule; or

a tenth determining submodule, configured to determine that the stride P includes a greatest common divisor of quantized values of some or all the periodicity values meeting the second rule.

As an optional embodiment, the periodicity values meeting the second rule include at least one of the following:

periodicity values less than 100; or
periodicity values that are not a multiple of 10.

As an optional embodiment, a quantization rule of the quantized values of some or all the periodicity values includes at least one of the following:

rounding up;
rounding down;
rounding; or
a predefined or pre-configured or configured rule.

As an optional embodiment, values of the strides P are equal to some or all values of non-zero periodicity values in the resource pool.

As an optional embodiment, the second determining module includes:

an eleventh determining submodule, configured to determine that the stride P is equal to the periodicity value configured by the terminal.

As an optional embodiment, the third determining module includes:

a twelfth determining submodule, configured to determine that the stride P is equal to the periodicity value of the sidelink DRX.

As an optional embodiment, the apparatus further includes at least one of the following:

a fifth determining module, configured to determine a quantity of the first resource sensing windows; or

a sixth determining module, configured to determine a position of the first resource sensing window.

As an optional embodiment, the quantity of the first resource sensing windows includes an optional quantity of the first resource sensing windows, where the optional quantity of the first resource sensing windows is related to at least one of the following parameters:

a predefined or pre-configured or configured quantity.

a time length T1 between a starting position of the resource selection window and a resource selection trigger moment;

a time length $T1_{min}$ between an optional starting position of the resource selection window and a resource selection trigger moment;

a time length T2 between an ending position of the resource selection window and a resource selection trigger moment n;

a time length $T2_{max}$ between an optional starting position of the resource selection window and a resource selection trigger moment;

a time length T0 between a starting position of an optional resource sensing window and a resource selection trigger moment;

predefined or pre-configured first processing time $T_{proc,0}^{SL}$ ;

predefined or pre-configured second processing time $T_{proc,1}^{SL}$ ; or

the stride P.

As an optional embodiment, the optional quantity of the first resource sensing windows includes at least one of the following:

$$(T1+T0)/P;$$

$$(T1_{min}+T0)/P;$$

$$(T2+T0)/P$$

$$(T2_{max}+T0)/P$$

$$T0/P;$$

$$(T0-T_{proc,0}^{SL})/P;$$

$$(T0+T_{proc,1}^{SL}-100)/P;$$

$$(T1+T0-100)/P;$$

$$(T1_{min}+T0-100)/P;$$

$$(T2+T0-100)/P$$

$$(T2_{max}+T0-100)/P$$

$$(T0-100)/P;$$

$$(T0\text{-}T_{proc,0}^{SL} - 100)/P;$$

$$(T0\text{+}T_{proc,1}^{SL} - 100)/P;$$

or
a predefined or pre-configured or configured quantity.

As an optional embodiment, the sixth determining submodule includes:
a twelfth determining submodule, configured to determine the position of the first resource sensing window as: some or all positions meeting Y-j*P within a preset range, where Y is a resource in a resource selection window of the terminal, j is a value obtained according to a predefined or pre-configured or configured parameter, and P is the stride.

The preset range includes at least one of the following:

a range between a starting position of an optional resource sensing window and a starting position of the resource selection window;

a range starting backward from a starting position of an optional resource sensing window for a preset time to a starting position of the resource selection window;

a range between a starting position of an optional resource sensing window and an ending position of the optional resource sensing window;

a range starting backward from a starting position of an optional resource sensing window for a preset time to an ending position of the optional resource sensing window;

a range between a starting position of the resource sensing window and a resource selection trigger moment;

a range starting backward from a starting position of the resource sensing window for a preset time to a resource selection trigger moment;

a range between an optional starting position of the resource sensing window and a resource selection trigger moment;

a range starting backward from an optional starting position of the resource sensing window for a preset time to a resource selection trigger moment;

a range between an ending position of the resource sensing window and a resource selection trigger moment;

a range starting backward from an ending position of the resource sensing window for a preset time to a resource selection trigger moment;

a range between an optional ending position of the resource sensing window and a resource selection trigger moment;

a range starting backward from an optional ending position of the resource sensing window for a preset time to a resource selection trigger moment;

a range starting forward from a starting position of the resource selection window for a time length T0 to the starting position of the resource selection window; or

a range starting forward from a starting position of the resource selection window for a time length T0 and then backward for a preset time to the starting position of the resource selection window.

As an optional embodiment, the part of positions is at least one of the following:

first N positions;
last N positions;
first N positions after N-T0+100; or
positions indicated by a bitmap bitmap,
where N is an actual quantity of the first resource sensing windows, N is a predefined or pre-configured or configured value, or N is a value determined according to configuration information.

As an optional embodiment, the apparatus further includes:

an exclusion module, configured to perform resource exclusion with a first periodicity value or a first stride as a periodicity value according to at least one of a sensing result in the first resource sensing window or a sensing result in the second resource sensing window,
where the first periodicity value is a periodicity value carried in sidelink control information received by the terminal in a corresponding resource sensing window; and the first stride is a stride corresponding to the periodicity value carried in the sidelink control information received by the terminal in the corresponding resource sensing window.

As an optional embodiment, a value of a quantity of excluded resources is Q; where Q is one of the following:

Q is equal to 1;
Q is equal to ceil (stride P/periodicity value T), where the ceil is a rounding-up operation, and the periodicity value T is not 0;
Q is equal to floor (stride P/periodicity value T), where the floor is a rounding-down operation, and the periodicity value T is not 0; or
Q is equal to round (stride P/periodicity value T), where the round is a rounding operation, the periodicity value T is not 0, and
the stride P is a sensing stride corresponding to the periodicity value T.

As an optional embodiment, a starting moment of the resource exclusion includes:

a moment when the sidelink control information is received; and
a starting moment of the resource selection window of the terminal.

As an optional embodiment, in a case that a first condition is met, the second resource sensing window is obtained, otherwise, the first resource sensing window is obtained, where the first condition includes at least one of the following:

a periodicity value configured by the terminal is less than a first periodicity value threshold;
a periodicity value configured in the resource pool includes one or more non-zero periodicity values less than a second periodicity value threshold;
a periodicity value configured in the resource pool is not enabled; or
a periodicity value configured by the terminal is 0.

As an optional embodiment, at least one of the first periodicity value threshold and the second periodicity value threshold is at least one of the following:

a predefined threshold;
a pre-configured threshold;
a configured threshold; or
a threshold related to the periodicity value configured in the resource pool.

In the embodiments of this application, a first resource sensing window is obtained through at least one stride P, and/or a second resource sensing window is obtained according to a resource selection window, so that a purpose of balancing power consumption and sensing performance can be achieved, a position of a time domain resource to be sensed by a terminal can be reduced, and a purpose of saving power can also be achieved.

It needs to be noted that, if the apparatus for obtaining a sensing window provided in the embodiments of this application is an apparatus capable of performing the method for obtaining a sensing window, all embodiments of the method for obtaining a sensing window are applicable to the apparatus and can achieve the same or similar beneficial effects.

The apparatus for obtaining a sensing window in the embodiments of this application may be an apparatus, or a component, an integrated circuit, or a chip in a terminal. The apparatus may be a mobile electronic device or a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), an automated teller machine, or a self-service machine. This is not specifically limited in the embodiments of this application.

The apparatus for obtaining a sensing window in the embodiments of this application may be an apparatus with an operating system. The operating system may be an Android (Android) operating system, or may be an ios operating system or other possible operating systems, which is not specifically limited in the embodiments of this application.

The apparatus for obtaining a sensing window provided in this embodiment of this application can implement the processes implemented in the method embodiments of FIG. 1 to FIG. 2. To avoid repetition, details are not described herein again.

Optionally, as shown in FIG. 4, the embodiments of this application further provide a terminal 400. The terminal 400 includes a processor 401, a memory 402, and a program or an instruction stored in the memory 402 and executable on the processor 401. When the program or instruction is executed by the processor 401, processes of the foregoing embodiments of the method for obtaining a sensing window are implemented, and the same technical effect can be achieved. To avoid repetition, details are not described herein again.

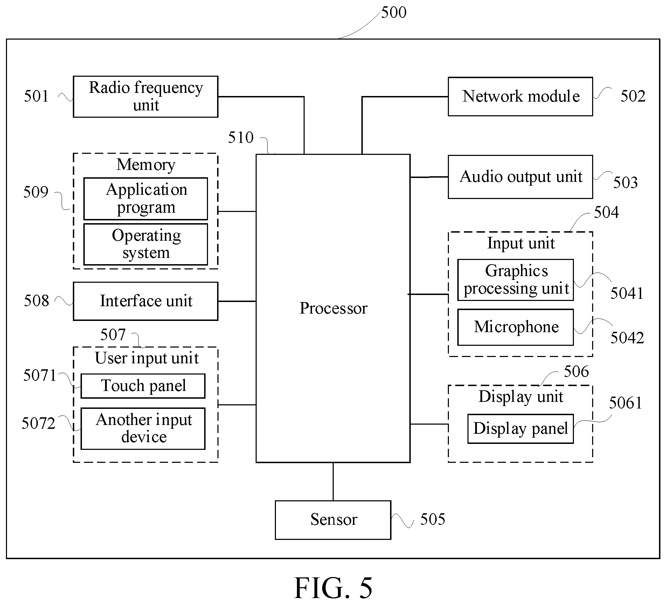

FIG. 5 is a schematic structural diagram of hardware of a terminal implementing an embodiment of this application. The terminal 500 includes, but is not limited to: components such as a radio frequency unit 501, a network module 502, an audio output unit 503, an input unit 504, a sensor 505, a display unit 506, a user input unit 507, an interface unit 508, a memory 509, and a processor 510.

Those skilled in the art may understand that the terminal 500 may further include a power supply (such as a battery) for supplying power to the components. The power supply may be logically connected to the processor 510 by using a power supply management system, thereby implementing functions such as charging, discharging, and power consumption management, by using the power supply management system. A terminal structure shown in FIG. 5 does not constitute a limitation to the terminal, and the terminal may include more or fewer components than those shown in the figure, or some components may be combined, or a different component deployment may be used. Details are not described herein again.

It should be understood that in the embodiments of this application, the input unit 504 may include a graphics processing unit (Graphics Processing Unit, GPU) 5041 and a microphone 5042, and the graphics processing unit 5041 processes image data of a still picture or a video obtained by an image capture apparatus (such as a camera) in a video capture mode or an image capture mode. The display unit 506 may include a display panel 5061. The display panel 5061 may be configured by using a liquid crystal display, an organic light-emitting diode, or the like. The user input unit 507 includes a touch panel 5071 and another input device 5072. The touch panel 5071 is also referred to as a touch screen. The touch panel 5071 may include two parts: a touch detection apparatus and a touch controller. The another input device 5072 may include, but is not limited to, a physical keyboard, a functional key (for example, a volume control key or a switch key), a track ball, a mouse, and a joystick, and details will not be described herein again.

In the embodiments of this application, the radio frequency unit 501 is configured to receive downlink data from a network side device and transmit the downlink data to the processor 510 for processing; and send uplink data to the network side device. Generally, the radio frequency unit 501 includes, but is not limited to, an antenna, at least one amplifier, a transceiver, a coupler, a low noise amplifier, a duplexer, and the like.

The memory 509 may be configured to store a software program or instruction and various data. The memory 509 may mainly include a program or instruction storage area and a data storage area. The program or instruction storage area may store an operating system, an application program or instruction required by at least one function (for example, a sound playback function and an image display function), and the like. In addition, the memory 509 may include a high-speed random access memory and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The memory 509 may include, for example, at least one magnetic disk memory device, a flash memory device, or other non-volatile solid-state memory devices.

Optionally, the processor 510 may include one or more processing units. Optionally, the processor 510 may integrate an application processor and a modem processor, where the application processor mainly processes an operating system, a user interface, an application program or instruction, and the like, and the modem processor mainly processes wireless communication, such as a baseband processor. It may be understood that the modem processor may alternatively not be integrated into the processor 510.

The processor 510 is configured to obtain a first resource sensing window according to at least one stride P; and/or obtain a second resource sensing window according to a resource selection window.

Optionally, the processor 510 is further configured to determine the stride P according to a periodicity value configured in the resource pool;

determine the stride P according to a periodicity value configured by a terminal;
determine the stride P according to a periodicity value of sidelink discontinuous reception DRX; and
determine the stride P according to predefinition, or pre-configuration, or configuration.

Optionally, the processor 510 is further configured to obtain the second resource sensing window in a case that a first condition is met, otherwise, to obtain the first resource sensing window, where the first condition includes at least one of the following:

a periodicity value configured by the terminal is less than a first periodicity value threshold;
a periodicity value configured in the resource pool includes one or more non-zero periodicity values less than a second periodicity value threshold;

a periodicity value configured in the resource pool is not enabled; or

a periodicity value configured by the terminal is 0.

In the embodiments of this application, a first resource sensing window is obtained through at least one stride P, and/or a second resource sensing window is obtained according to a resource selection window, so that a purpose of balancing power consumption and sensing performance can be achieved, a position of a time domain resource to be sensed by a terminal can be reduced, and a purpose of saving power can also be achieved.

The embodiments of this application further provide a readable storage medium storing therein a program or an instruction. The program or instruction is executed by a processor to implement the processes of the embodiments of the method for obtaining a sensing window, and the same technical effects can be achieved. To avoid repetition, details are not described herein again.

The processor is a processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

The embodiments of this application not covered by the claims further provide a chip, including a processor and a communication interface. The communication interface is coupled to the processor, and the processor is configured to run a program or an instruction to implement processes of the embodiments of the method for obtaining a sensing window, and the same technical effect can be achieved. To avoid repetition, details are not described herein again.

It should be noted that, the chip mentioned in the embodiments of this application may also be referred to as a system-level chip, a system chip, a chip system, a system on chip, or the like.

It may be understood that the embodiments described in the disclosure may be implemented by hardware, software, firmware, middleware, microcode, or a combination thereof. For hardware implementation, a module, a unit, a submodule, and a subunit may be implemented in one or more application-specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a micro-controller, a microprocessor, and other electronic units configured to execute the functions described in this application, or a combination of the above.

It needs to be noted that, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by a sentence "including one" does not exclude that there are still other same elements in the process, method, object, or apparatus. Furthermore, it should be noted that a scope of the methods and apparatus in the implementations of this application is not limited to performing the functions in the order shown or discussed, but may also include performing the functions in a substantially simultaneous manner or in the reverse order depending on the functions involved. For example, the methods described may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may also be implemented by hardware, but in many cases, the former manner is a better implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods according to the embodiments of this application.

Although the embodiments of this application have been described above with reference to the accompanying drawings, this application is not limited to the specific implementations described above, and the specific implementations described above are merely exemplary and not limitative.

The foregoing descriptions are merely specific implementations of this application, the protection scope of this application shall be subject to the protection scope of the claims.

## Claims

**1.** A method for obtaining a sensing window, performed by a terminal, wherein the method comprises:

obtaining (101) first resource sensing windows according to at least one step size P in time;
wherein the method further comprises: determining positions of the first resource sensing windows, and **characterized in that** the determining positions of the first resource sensing windows comprises:

determining the positions of the first resource sensing windows as: some or all positions meeting $Y-j*P$ within a preset range; wherein Y is a resource in a resource selection window of the terminal, j is a value obtained according to a predefined or pre-configured or configured parameter, and P is the step size in time; and the preset range comprises at least one of the following:

a range between a starting position of an optional resource sensing window and a starting position of the resource selection window;

a range starting backward from a starting position of an optional resource sensing window for a preset time to a starting position of the resource selection window;

a range between a starting position of an optional resource sensing window and an ending position of the optional resource sensing window;

a range starting backward from a starting position of an optional resource sensing window for a preset time to an ending position of the optional resource sensing window;

a range between a starting position of the resource sensing window and a resource selection trigger moment;

a range starting backward from a starting position of the resource sensing window for a preset time to a resource selection trigger moment;

a range between an optional starting position of the resource sensing window and a resource selection trigger moment;

a range starting backward from an optional starting position of the resource sensing window for a preset time to a resource selection trigger moment;

a range between an ending position of the resource sensing window and a resource selection trigger moment;

a range starting backward from an ending position of the resource sensing window for a preset time to a resource selection trigger moment;

a range between an optional ending position of the resource sensing window and a resource selection trigger moment;

a range starting backward from an optional ending position of the resource sensing window for a preset time to a resource selection trigger moment;

a range starting forward from a starting position of the resource selection window for a time length T0 to the starting position of the resource selection window; or

a range starting forward from a starting position of the resource selection window for a time length T0 and then backward for a preset time to the starting position of the resource selection window.

2. The method according to claim 1, further comprising at least one of the following:

determining the step size P in time according to a periodicity value configured in a resource pool;
determining the step size P in time according to a periodicity value configured by a terminal;
determining the step size P in time according to a periodicity value of sidelink discontinuous reception, DRX; or
determining the step size P in time according to predefinition, or pre-configuration, or configuration.

3. The method according to claim 1 or 2, wherein a value of the step size P in time is less than or equal to a first value, wherein the first value is a predefined value, or a pre-configured value, or a configured value, or a value determined according to a terminal capability, or a value determined according to quality of service.

4. The method according to claim 2, wherein the determining the step size P in time according to a periodicity value configured in a resource pool comprises at least one of the following:

determining the step size P in time according to a least common multiple of some or all the periodicity values configured in the resource pool;
determining the step size P in time according to a greatest common divisor of some or all the periodicity values configured in the resource pool; or
determining the step size P in time corresponding to the periodicity value configured in the resource pool according to a step size value corresponding to a predefined or pre-configured or configured periodicity value range.

5. The method according to claim 2, wherein if there are M1 periodicity values meeting a first rule in the periodicity value configured in the resource pool, wherein M1 is a predefined or pre-configured or configured value, the determining the step size P in time according to a periodicity value configured in a resource pool comprises at least one of the following:

    determining that the step size P in time comprises 100 milliseconds;
    determining that the step size P in time comprises a greatest common divisor of some or all the periodicity values meeting the first rule; or
    determining that the step size P in time comprises a least common multiple of some or all the periodicity values meeting the first rule.

6. The method according to claim 2, wherein if there are M2 periodicity values meeting a second rule in the periodicity value configured in the resource pool, wherein M2 is a predefined or pre-configured or configured value, the determining the step size P in time according to a periodicity value configured in a resource pool comprises at least one of the following:

    determining that the step size P in time comprises a least common multiple of some or all the periodicity values meeting the second rule;
    determining that the step size P in time comprises a greatest common divisor of some or all the periodicity values meeting the second rule;
    determining that the step size P in time comprises a least common multiple of quantized values of some or all the periodicity values meeting the second rule; or
    determining that the step size P in time comprises a greatest common divisor of quantized values of some or all the periodicity values meeting the second rule.

7. The method according to claim 2, wherein values of the at least one step size P in time are equal to some or all values of non-zero periodicity values in the resource pool; or,
the determining the step size P in time according to a periodicity value configured by a terminal comprises:

    determining that the step size P in time is equal to the periodicity value configured by the terminal; or,
    the determining the step size P in time according to a periodicity value of sidelink discontinuous reception, DRX, comprises:
    determining that the step size P in time is equal to the periodicity value of the sidelink DRX.

8. The method according to claim 1, wherein the method further comprises:
determining a quantity of the first resource sensing windows.

9. The method according to claim 8, wherein the quantity of the first resource sensing windows comprises an optional quantity of the first resource sensing windows, wherein the optional quantity of the first resource sensing windows is related to at least one of the following parameters:

    a predefined or pre-configured or configured quantity;
    a time length T1 between a starting position of the resource selection window and a resource selection trigger moment;
    a time length $T1_{min}$ between an optional starting position of the resource selection window and a resource selection trigger moment;
    a time length T2 between an ending position of the resource selection window and a resource selection trigger moment n;
    a time length $T2_{max}$ between an optional starting position of the resource selection window and a resource selection trigger moment;
    a time length T0 between a starting position of an optional resource sensing window and a resource selection trigger moment;

    predefined or pre-configured first processing time $T_{proc,0}^{SL}$ ;

    predefined or pre-configured second processing time $T_{proc,1}^{SL}$ ; or
    the step size P in time.

10. The method according to claim 9, wherein the optional quantity of the first resource sensing windows comprises at least one of the following:

$$(T1+T0)/P;$$

$$(T1_{min}+T0)/P;$$

$$(T2+T0)/P$$

$$(T2_{max}+T0)/P$$

$$T0/P;$$

$$(T0-T^{SL}_{proc,0})/P;$$

$$(T0+T^{SL}_{proc,1} - 100)/P;$$

$$(T1+T0-100)/P;$$

$$(T1_{min}+T0-100)/P;$$

$$(T2+T0-100)/P;$$

$$(T2_{max}+T0-100)/P;$$

$$(T0-100)/P;$$

$$(T0-T^{SL}_{proc,0} - 100)/P;$$

$$(T0+T^{SL}_{proc,1} - 100)/P;$$

or
a predefined or pre-configured or configured quantity.

11. The method according to claim 1, wherein the some positions are at least one of the following:

first N positions;
last N positions;
first N positions after N-T0+100; or
positions indicated by a bitmap,
wherein N is an actual quantity of the first resource sensing windows, N is a predefined or pre-configured or configured value, or N is a value determined according to configuration information.

12. The method according to claim 1, further comprising:

performing resource exclusion with a first periodicity value or a first step size in time as a periodicity value according to at least one of a sensing result in the first resource sensing windows or a sensing result in a second resource sensing window obtained according to a resource selection window,

wherein the first periodicity value is a periodicity value carried in sidelink control information received by the terminal in a corresponding resource sensing window; and the first step size in time is a step size corresponding to the periodicity value carried in the sidelink control information received by the terminal in the corresponding resource sensing window.

13. The method according to claim 1, wherein the method further comprises: in a case that a first condition is met, obtaining (102) a second resource sensing window according to a resource selection window; otherwise, the first resource sensing windows are obtained, wherein the first condition comprises at least one of the following:

a periodicity value configured by the terminal is less than a first periodicity value threshold;
a periodicity value configured in the resource pool comprises one or more non-zero periodicity values less than a second periodicity value threshold;
a periodicity value configured in the resource pool is not enabled; or
a periodicity value configured by the terminal is 0.

14. A terminal (400), comprising a processor (401), a memory (402), and a program or an instruction stored on the memory (402) and executable on the processor (401), the program or instruction, when executed by the processor (401), implementing steps of the method for obtaining a sensing window according to any one of claims 1 to 13.

15. A computer readable storage medium, storing a program, the program, when executed by a processor of a terminal, causes the terminal to implement the steps of the method for obtaining a sensing window according to any one of claims 1 to 13.

**Patentansprüche**

1. Verfahren zum Erhalten eines Sensing-Fensters, ausgeführt von einem Endgerät,
wobei das Verfahren umfasst:

Erhalten (101) von ersten Ressourcen-Sensing-Fenstern gemäß mindestens einer Zeitschrittweite P;
wobei das Verfahren ferner umfasst: Bestimmen von Positionen der ersten Ressourcen-Sensing-Fenster, und **dadurch gekennzeichnet, dass** das Bestimmen der Positionen der ersten Ressourcen-Sensing-Fenster umfasst:

Bestimmen der Positionen der ersten Ressourcen-Sensing-Fenster als: einige oder alle Positionen, die Y-j*P innerhalb eines vorgegebenen Bereichs erfüllen; wobei Y eine Ressource in einem Ressourcenauswahlfenster des Endgeräts ist, j ein Wert ist, der gemäß einem vordefinierten oder vorkonfigurierten oder konfigurierten Parameter erhalten wird, und P die Zeitschrittweite ist; und
wobei der vorgegebene Bereich mindestens einen der folgenden Bereiche umfasst:

einen Bereich zwischen einer Startposition eines optionalen Ressourcen-Sensing-Fensters und einer Startposition des Ressourcenauswahlfensters;
einen Bereich, der rückwärtsgehend ausgehend von einer Startposition eines optionalen Ressourcen-Sensing-Fensters über eine vorgegebene Zeit bis zu einer Startposition des Ressourcenauswahlfensters verläuft;
einen Bereich zwischen einer Startposition eines optionalen Ressourcen-Sensing-Fensters und einer Endposition des optionalen Ressourcen-Sensing-Fensters;
einen Bereich, der rückwärtsgehend ausgehend von einer Startposition eines optionalen Ressourcen-Sensing-Fensters über eine vorgegebene Zeit bis zu einer Endposition des optionalen Ressourcen-Sensing-Fensters verläuft;
einen Bereich zwischen einer Startposition des Ressourcen-Sensing-Fensters und einem Ressourcenauswahl-Triggerzeitpunkt;
einen Bereich, der rückwärtsgehend ausgehend von einer Startposition des Ressourcen-Sensing-Fensters über eine vorgegebene Zeit bis zu einem Ressourcenauswahl-Triggerzeitpunkt verläuft;
einen Bereich zwischen einer optionalen Startposition des Ressourcen-Sensing-Fensters und einem Ressourcenauswahl-Triggerzeitpunkt;
einen Bereich, der rückwärtsgehend ausgehend von einer optionalen Startposition des Ressourcen-Sensing-Fensters über eine vorgegebene Zeit bis zu einem Ressourcenauswahl-Triggerzeitpunkt verläuft;

einen Bereich zwischen einer Endposition des Ressourcen-Sensing-Fensters und einem Ressourcenauswahl-Triggerzeitpunkt;

einen Bereich, der rückwärtsgehend ausgehend von einer Endposition des Ressourcen-Sensing-Fensters über eine vorgegebene Zeit bis zu einem Ressourcenauswahl-Triggerzeitpunkt verläuft;

einen Bereich zwischen einer optionalen Endposition des Ressourcen-Sensing-Fensters und einem Ressourcenauswahl-Triggerzeitpunkt;

einen Bereich, der rückwärtsgehend ausgehend von einer optionalen Endposition des Ressourcen-Sensing-Fensters über eine vorgegebene Zeit bis zu einem Ressourcenauswahl-Triggerzeitpunkt verläuft;

einen Bereich, der vorwärtsgehend ausgehend von einer Startposition des Ressourcenauswahlfensters über eine Zeitdauer T0 verläuft; oder

einen Bereich, der vorwärtsgehend ausgehend von einer Startposition des Ressourcenauswahlfensters über eine Zeitdauer T0 und anschließend rückwärtsgehend über eine vorgegebene Zeit bis zu der Startposition des Ressourcenauswahlfensters verläuft.

2. Verfahren nach Anspruch 1, ferner umfassend mindestens eines der folgenden:

Bestimmen der Zeitschrittweite P gemäß einem Periodizitätswert, der in einem Ressourcenpool konfiguriert ist;
Bestimmen der Zeitschrittweite P gemäß einem vom Endgerät konfigurierten Periodizitätswert;
Bestimmen der Zeitschrittweite P gemäß einem Periodizitätswert einer Sidelink Discontinuous Reception, DRX; oder
Bestimmen der Zeitschrittweite P gemäß einer Vordefinition oder Vorkonfiguration oder Konfiguration.

3. Verfahren nach Anspruch 1 oder 2, wobei ein Wert der Zeitschrittweite P kleiner oder gleich einem ersten Wert ist, wobei der erste Wert ein vordefinierter Wert oder ein vorkonfigurierter Wert oder ein konfigurierter Wert oder ein gemäß einer Endgerätefähigkeit bestimmter Wert ist oder ein gemäß einer Servicequalität bestimmter Wert ist.

4. Verfahren nach Anspruch 2, wobei das Bestimmen der Zeitschrittweite P gemäß einem Periodizitätswert, der in einem Ressourcenpool konfiguriert ist, mindestens eines der folgenden umfasst:

Bestimmen der Zeitschrittweite P gemäß dem kleinsten gemeinsamen Vielfachen einiger oder aller im Ressourcenpool konfigurierten Periodizitätswerte;
Bestimmen der Zeitschrittweite P gemäß dem größten gemeinsamen Teiler einiger oder aller im Ressourcenpool konfigurierten Periodizitätswerte; oder
Bestimmen der Zeitschrittweite P entsprechend dem im Ressourcenpool konfigurierten Periodizitätswert gemäß einem Schrittweitenwert, der einem vordefinierten oder vorkonfigurierten oder konfigurierten Periodizitätswertbereich entspricht.

5. Verfahren nach Anspruch 2, wobei, wenn es M1 Periodizitätswerte in den im Ressourcenpool konfigurierten Periodizitätswerten gibt, die eine erste Regel erfüllen, wobei M1 ein vordefinierter oder vorkonfigurierter oder konfigurierter Wert ist, das Bestimmen der Zeitschrittweite P gemäß einem im Ressourcenpool konfigurierten Periodizitätswert mindestens eines der folgenden umfasst:

Bestimmen, dass die Zeitschrittweite P 100 Millisekunden umfasst;
Bestimmen, dass die Zeitschrittweite P den größten gemeinsamen Teiler einiger oder aller Periodizitätswerte umfasst, die die erste Regel erfüllen; oder
oder Bestimmen, dass die Zeitschrittweite P das kleinste gemeinsame Vielfache einiger oder aller Periodizitätswerte umfasst, die die erste Regel erfüllen.

6. Verfahren nach Anspruch 2, wobei, wenn es M2 Periodizitätswerte in den im Ressourcenpool konfigurierten Periodizitätswerten gibt, die eine zweite Regel erfüllen, wobei M2 ein vordefinierter oder vorkonfigurierter oder konfigurierter Wert ist, das Bestimmen der Zeitschrittweite P gemäß einem im Ressourcenpool konfigurierten Periodizitätswert mindestens eines der folgenden umfasst:

Bestimmen, dass die Zeitschrittweite P das kleinste gemeinsame Vielfache einiger oder aller Periodizitätswerte umfasst, die die zweite Regel erfüllen;

Bestimmen, dass die Zeitschrittweite P den größten gemeinsamen Teiler einiger oder aller Periodizitätswerte umfasst, die die zweite Regel erfüllen;

Bestimmen, dass die Zeitschrittweite P das kleinste gemeinsame Vielfache quantisierter Werte einiger oder aller Periodizitätswerte umfasst, die die zweite Regel erfüllen; oder

Bestimmen, dass die Zeitschrittweite P den größten gemeinsamen Teiler quantisierter Werte einiger oder aller Periodizitätswerte umfasst, die die zweite Regel erfüllen.

7. Verfahren nach Anspruch 2, wobei Werte der mindestens einen Zeitschrittweite P gleich einigen oder allen Werten von Null verschiedenen Periodizitätswerten in dem Ressourcenpool sind; oder,

wobei das Bestimmen der Zeitschrittweite P gemäß einem vom Endgerät konfigurierten Periodizitätswert umfasst:

Bestimmen, dass die Zeitschrittweite P gleich dem vom Endgerät konfigurierten Periodizitätswert ist; oder
wobei das Bestimmen der Zeitschrittweite P gemäß einem Periodizitätswert der Sidelink Discontinuous Reception, DRX, umfasst:
Bestimmen, dass die Zeitschrittweite P gleich dem Periodizitätswert der Sidelink-DRX ist.

8. Verfahren nach Anspruch 1, wobei das Verfahren ferner umfasst:
Bestimmen einer Anzahl der ersten Ressourcen-Sensing-Fenster.

9. Verfahren nach Anspruch 8, wobei die Anzahl der ersten Ressourcen-Sensing-Fenster eine optionale Anzahl der ersten Ressourcen-Sensing-Fenster umfasst, wobei die optionale Anzahl der ersten Ressourcen-Sensing-Fenster in Beziehung zu mindestens einem der folgenden Parameter steht:

einer vordefinierten oder vorkonfigurierten oder konfigurierten Anzahl;
einer Zeitdauer T1 zwischen einer Startposition des Ressourcenauswahlfensters und einem Ressourcenauswahl-Triggerzeitpunkt;
einer Zeitdauer $T1_{min}$ zwischen einer optionalen Startposition des Ressourcenauswahlfensters und einem Ressourcenauswahl-Triggerzeitpunkt;
einer Zeitdauer T2 zwischen einer Endposition des Ressourcenauswahlfensters und einem Ressourcenauswahl-Triggerzeitpunkt n;
einer Zeitdauer $T2_{max}$ zwischen einer optionalen Startposition des Ressourcenauswahlfensters und einem Ressourcenauswahl-Triggerzeitpunkt;
einer Zeitdauer T0 zwischen einer Startposition eines optionalen Ressourcen-Sensing-Fensters und einem Ressourcenauswahl-Triggerzeitpunkt;

einer vordefinierten oder vorkonfigurierten ersten Verarbeitungszeit $T_{proc,0}^{SL}$;

einer vordefinierten oder vorkonfigurierten zweiten Verarbeitungszeit $T_{proc,1}^{SL}$; oder
der Zeitschrittweite P.

10. Verfahren nach Anspruch 9, wobei die optionale Anzahl der ersten Ressourcen-Sensing-Fenster mindestens einen der folgenden Ausdrücke umfasst:

$$(T1+T0)/P;$$

$$(T1_{min}+T0)/P;$$

$$(T2+T0)/P$$

$$(T2_{max}+T0)/P$$

$$T0/P;$$

$$(T0\text{-}T_{proc,0}^{SL})/P;$$

$$(T0\text{+}T_{proc,1}^{SL} - 100)/P;$$

$$(T1\text{+}T0\text{-}100)/P;$$

$$(T1_{min}\text{+}T0\text{-}100)/P;$$

$$(T2\text{+}T0\text{-}100)/P;$$

$$(T2_{max}\text{+}T0\text{-}100)/P;$$

$$(T0\text{-}100)/P;$$

$$(T0\text{-}T_{proc,0}^{SL} - 100)/P;$$

$$(T0\text{+}T_{proc,1}^{SL} - 100)/P;$$

oder
oder eine vordefinierte oder vorkonfigurierte oder konfigurierte Anzahl.

**11.** Verfahren nach Anspruch 1, wobei die einigen Positionen mindestens eine der folgenden sind:

erste N Positionen;
letzte N Positionen;
erste N Positionen nach N-T0+100; oder
durch eine Bitmap angegebene Positionen,
wobei N eine tatsächliche Anzahl der ersten Ressourcen-Sensing-Fenster ist, N ein vordefinierter oder vorkonfigurierter oder konfigurierter Wert ist oder N ein gemäß Konfigurationsinformationen bestimmter Wert ist.

**12.** Verfahren nach Anspruch 1, ferner umfassend:

Durchführen eines Ressourcenausschlusses mit einem ersten Periodizitätswert oder einer ersten Zeitschrittweite als Periodizitätswert gemäß mindestens einem von einem Sensing-Ergebnis in den ersten Ressourcen-Sensing-Fenstern oder einem Sensing-Ergebnis in einem zweiten Ressourcen-Sensing-Fenster, das gemäß einem Ressourcenauswahlfenster erhalten wird,
wobei der erste Periodizitätswert ein Periodizitätswert ist, der in einer vom Endgerät empfangenen Sidelink-Steuerinformation in einem entsprechenden Ressourcen-Sensing-Fenster enthalten ist, und die erste Zeitschrittweite eine Schrittweite ist, die dem Periodizitätswert entspricht, der in der vom Endgerät empfangenen Sidelink-Steuerinformation in dem entsprechenden Ressourcen-Sensing-Fenster enthalten ist.

**13.** Verfahren nach Anspruch 1, wobei das Verfahren ferner umfasst: in einem Fall, dass eine erste Bedingung erfüllt ist, Erhalten (102) eines zweiten Ressourcen-Sensing-Fensters gemäß einem Ressourcenauswahlfenster; andernfalls werden die ersten Ressourcen-Sensing-Fenster erhalten, wobei die erste Bedingung mindestens eines der folgenden umfasst:

ein vom Endgerät konfigurierter Periodizitätswert ist kleiner als ein erster Periodizitätsschwellenwert;
ein im Ressourcenpool konfigurierter Periodizitätswert umfasst einen oder mehrere von Null verschiedene Periodizitätswerte, die kleiner als ein zweiter Periodizitätsschwellenwert sind;
ein im Ressourcenpool konfigurierter Periodizitätswert ist nicht aktiviert; oder

ein vom Endgerät konfigurierter Periodizitätswert ist 0.

**14.** Endgerät (400), aufweisend einen Prozessor (401), einen Speicher (402) sowie ein im Speicher (402) gespeichertes Programm oder eine Anweisung, die auf dem Prozessor (401) ausführbar ist, wobei das Programm oder die Anweisung bei Ausführung durch den Prozessor (401) die Schritte des Verfahrens zum Erhalten eines Sensing-Fensters nach einem der Ansprüche 1 bis 13 durchzuführen.

**15.** Computerlesbares Speichermedium, auf dem ein Programm gespeichert ist, wobei das Programm, wenn es von einem Prozessor eines Endgeräts ausgeführt wird, das Endgerät veranlasst, die Schritte des Verfahrens zum Erhalten eines Sensing-Fensters nach einem der Ansprüche 1 bis 13 durchzuführen.

**Revendications**

**1.** Procédé d'obtention d'une fenêtre de détection, réalisé par un terminal, dans lequel le procédé comprend :

l'obtention (101) de premières fenêtres de détection de ressources en fonction d'au moins une taille de pas P dans le temps ;
dans lequel le procédé comprend en outre : la détermination des positions des premières fenêtres de détection de ressources, et **caractérisé en ce que** la détermination des positions des premières fenêtres de détection de ressources comprend :

la détermination des positions des premières fenêtres de détection de ressources comme suit : certaines ou toutes les positions se rencontrant Y-j*P dans une plage prédéfinie ; dans laquelle Y est une ressource dans une fenêtre de sélection de ressources du terminal, j est une valeur obtenue en fonction d'un paramètre prédéfini, ou préconfiguré, ou configuré, et P est la taille de pas dans le temps ; et
la plage prédéfinie comprend au moins l'un des éléments suivants :

une plage entre une position de départ d'une fenêtre de détection de ressources facultative et une position de départ de la fenêtre de sélection de ressources ;
une plage commençant à rebours à partir d'une position de départ d'une fenêtre de détection de ressources facultative pendant une durée prédéfinie jusqu'à une position de départ de la fenêtre de sélection de ressources ;
une plage entre une position de départ d'une fenêtre de détection de ressources facultative et une position finale de la fenêtre de détection de ressources facultative ;
une plage commençant à rebours à partir d'une position de départ d'une fenêtre de détection de ressources facultative pendant une durée prédéfinie jusqu'à une position finale de la fenêtre de détection de ressources facultative ;
une plage entre une position de départ de la fenêtre de détection de ressources et un moment de déclenchement de la sélection de ressources ;
une plage commençant à rebours à partir d'une position de départ de la fenêtre de détection de ressources pendant une durée prédéfinie jusqu'à un moment de déclenchement de la sélection de ressources ;
une plage entre une position de départ facultative de la fenêtre de détection de ressources et un moment de déclenchement de la sélection de ressources ;
une plage commençant à rebours à partir d'une position de départ facultative de la fenêtre de détection de ressources pendant une durée prédéfinie jusqu'à un moment de déclenchement de la sélection de ressources ;
une plage entre une position finale de la fenêtre de détection de ressources et un moment de déclenchement de la sélection de ressources ;
une plage commençant à rebours à partir d'une position finale de la fenêtre de détection de ressources pendant une durée prédéfinie jusqu'à un moment de déclenchement de la sélection de ressources ;
une plage entre une position finale facultative de la fenêtre de détection de ressources et un moment de déclenchement de la sélection de ressources ;
une plage commençant à rebours à partir d'une position finale facultative de la fenêtre de détection de ressources pendant une durée prédéfinie jusqu'à un moment de déclenchement de la sélection de ressources ;
une plage commençant de l'avant à partir d'une position de départ de la fenêtre de sélection de ressources pendant une durée T0 jusqu'à la position de départ de la fenêtre de sélection de ressources ; ou

une plage commençant de l'avant à partir d'une position de départ de la fenêtre de sélection de ressources pendant une durée T0, puis à rebours pendant une durée prédéfinie jusqu'à la position de départ de la fenêtre de sélection de ressources.

2. Procédé selon la revendication 1, comprenant en outre au moins l'un des éléments suivants :

la détermination de la taille de pas P dans le temps en fonction d'une valeur de périodicité configurée dans un pool de ressources ;
la détermination de la taille de pas P dans le temps en fonction d'une valeur de périodicité configurée par un terminal ;
la détermination de la taille de pas P dans le temps en fonction d'une valeur de périodicité de réception discontinue, DRX, de liaison latérale ; ou
la détermination de la taille de pas P dans le temps en fonction d'une prédéfinition, ou d'une préconfiguration, ou d'une configuration.

3. Procédé selon la revendication 1 ou 2, dans lequel une valeur de la taille de pas P dans le temps est inférieure ou égale à une première valeur,
dans lequel la première valeur est une valeur prédéfinie, ou une valeur préconfigurée, ou une valeur configurée, ou une valeur déterminée en fonction d'une capacité de terminal, ou une valeur déterminée en fonction de la qualité de service.

4. Procédé selon la revendication 2, dans lequel la détermination de la taille de pas P dans le temps en fonction d'une valeur de périodicité configurée dans un pool de ressources comprend au moins l'un des éléments suivants :

la détermination de la taille de pas P dans le temps en fonction d'un plus petit commun multiple de certaines ou de toutes les valeurs de périodicité configurées dans le pool de ressources;
la détermination de la taille de pas P dans le temps en fonction d'un plus grand commun diviseur de certaines ou de toutes les valeurs de périodicité configurées dans le pool de ressources ; ou
la détermination de la taille de pas P dans le temps correspondant à la valeur de périodicité configurée dans le pool de ressources en fonction d'une valeur de taille de pas correspondant à une plage de valeurs de périodicité prédéfinie, ou préconfigurée, ou configurée.

5. Procédé selon la revendication 2, dans lequel s'il existe M1 valeurs de périodicité satisfaisant une première règle concernant la valeur de périodicité configurée dans le pool de ressources, dans lequel M1 est une valeur prédéfinie, ou préconfigurée, ou configurée, la détermination de la taille de pas P dans le temps en fonction d'une valeur de périodicité configurée dans un pool de ressources comprend au moins l'un des éléments suivants :

la détermination que la taille de pas P dans le temps comprend 100 millisecondes ;
la détermination que la taille de pas P dans le temps comprend un plus grand commun diviseur de certaines ou de toutes les valeurs de périodicité satisfaisant la première règle ; ou
la détermination que la taille de pas P dans le temps comprend un plus petit commun multiple de certaines ou de toutes les valeurs de périodicité satisfaisant la première règle.

6. Procédé selon la revendication 2, dans lequel, s'il existe M2 valeurs de périodicité satisfaisant une seconde règle concernant la valeur de périodicité configurée dans le pool de ressources, dans lequel M2 est une valeur prédéfinie, ou préconfigurée, ou configurée, la détermination de la taille de pas P dans le temps en fonction d'une valeur de périodicité configurée dans un pool de ressources comprend au moins l'un des éléments suivants :

la détermination que la taille de pas P dans le temps comprend un plus petit commun multiple de certaines ou de toutes les valeurs de périodicité satisfaisant la seconde règle ;
la détermination que la taille de pas P dans le temps comprend un plus grand commun diviseur de certaines ou de toutes les valeurs de périodicité satisfaisant la seconde règle ;
la détermination que la taille de pas P dans le temps comprend un plus petit commun multiple de valeurs quantifiées de certaines ou de toutes les valeurs de périodicité satisfaisant la seconde règle ; ou
la détermination que la taille de pas P dans le temps comprend un plus grand commun diviseur de valeurs quantifiées de certaines ou de toutes les valeurs de périodicité satisfaisant la seconde règle.

7. Procédé selon la revendication 2, dans lequel des valeurs de la au moins une taille de pas P dans le temps sont égales à certaines ou à toutes les valeurs parmi les valeurs de périodicité non nulles du pool de ressources ; ou,

   la détermination de la taille de pas P dans le temps en fonction d'une valeur de périodicité configurée par un terminal comprend :
   la détermination que la taille de pas P dans le temps est égal à la valeur de périodicité configurée par le terminal ; ou,
   la détermination de la taille de pas P dans le temps en fonction d'une valeur de périodicité de réception discontinue, DRX, de liaison latérale comprend :
   la détermination que la taille de pas P dans le temps est égale à la valeur de périodicité du DRX de liaison latérale.

8. Procédé selon la revendication 1, dans lequel le procédé comprend en outre :
   la détermination d'une quantité des premières fenêtres de détection de ressources.

9. Procédé selon la revendication 8, dans lequel une quantité des premières fenêtres de détection de ressources comprend une quantité facultative des premières fenêtres de détection de ressources, dans lequel la quantité facultative des premières fenêtres de détection de ressources est liée à au moins l'un des paramètres suivants :

   une quantité prédéfinie, ou préconfigurée, ou configurée ;
   une durée T1 entre une position de départ de la fenêtre de sélection de ressources et un moment de déclenchement de la sélection de ressources ;
   une durée $T1_{min}$ entre une position de départ facultative de la fenêtre de sélection de ressources et un moment de déclenchement de la sélection de ressources ;
   une durée T2 entre une position finale de la fenêtre de sélection de ressources et un moment de déclenchement de la sélection de ressources n ;
   une durée $T2_{max}$ entre une position de départ facultative de la fenêtre de sélection de ressources et un moment de déclenchement de la sélection de ressources ;
   une durée T0 entre une position de départ d'une fenêtre de détection de ressources facultative et un moment du déclenchement de la sélection de ressources ;

   premier temps de traitement prédéfini ou préconfiguré $\mathrm{T}^{SL}_{\mathrm{proc},0}$ ;

   second temps de traitement prédéfini ou préconfiguré $\mathrm{T}^{SL}_{\mathrm{proc},1}$ ; ou
   la taille de pas P dans le temps.

10. Procédé selon la revendication 9, dans lequel la quantité facultative des premières fenêtres de détection de ressources comprend au moins l'une des valeurs suivantes :

$$(T1 + T0)/P$$

$$(T1_{min} + T0)/P$$

$$(T2 + T0)/P$$

$$(T2_{max} + T0)/P$$

$$T0/P ;$$

$$\left(T0 - \mathrm{T}^{SL}_{\mathrm{proc},0}\right)/P ;$$

$$\left(T0 + \mathrm{T}^{SL}_{\mathrm{proc},1} - 100\right)/P ;$$

$$(T1 + T0 - 100)/P ;$$

$$(T1_{\min} + T0 - 100)/P;$$

$$(T2 + T0 - 100)/P;$$

$$(T2_{\max} + T0 - 100)/P;$$

$$(T0 - 100)/P;$$

$$\left(T0 - T_{\text{proc},0}^{SL} - 100\right)/P;$$

$$\left(T0 + T_{\text{proc},1}^{SL} - 100\right)/P;$$

ou
une quantité prédéfinie, ou préconfigurée, ou configurée.

11. Procédé selon la revendication 1, dans lequel certaines positions sont au moins l'une des suivantes :

premières N positions ;
dernières N positions ;
premières N positions après N - T0 + 100 ; ou
positions indiquées par une image bitmap,
dans lesquelles N est une quantité réelle des premières fenêtres de détection de ressources, N est une valeur prédéfinie, ou préconfigurée, ou configurée, ou N est une valeur déterminée en fonction d'informations de configuration.

12. Procédé selon la revendication 1, comprenant en outre :

la réalisation de l'exclusion de ressources avec une première valeur de périodicité ou une première taille de pas dans le temps comme valeur de périodicité en fonction d'au moins l'un parmi un résultat de détection dans les premières fenêtres de détection de ressources ou un résultat de détection dans une seconde fenêtre de détection de ressources obtenu en fonction d'une fenêtre de sélection de ressources,
dans lequel la première valeur de périodicité est une valeur de périodicité contenue dans les informations de commande de liaison latérale reçues par le terminal dans une fenêtre de détection de ressources correspondante ; et la première taille de pas dans le temps est une taille de pas correspondant à la valeur de périodicité contenue dans les informations de commande de liaison latérale reçues par le terminal dans la fenêtre de détection de ressources correspondante.

13. Procédé selon la revendication 1, dans lequel le procédé comprend en outre : dans le cas où une première condition est remplie, l'obtention (102) d'une seconde fenêtre de détection de ressources en fonction d'une fenêtre de sélection de ressources ; sinon, les premières fenêtres de détection de ressources sont obtenues, dans laquelle la première condition comprend au moins l'une des suivantes :

une valeur de périodicité configurée par le terminal est inférieure à un premier seuil de valeur de périodicité ;
une valeur de périodicité configurée dans le pool de ressources comprend une ou plusieurs valeurs de périodicité non nulles inférieures à un second seuil de valeur de périodicité ;
une valeur de périodicité configurée dans le pool de ressources n'est pas activée ; ou
une valeur de périodicité configurée par le terminal vaut 0.

14. Terminal (400), comprenant un processeur (401), une mémoire (402) et un programme ou une instruction stocké dans la mémoire (402) et pouvant être exécuté(e) sur le processeur (401), le programme ou l'instruction, lorsqu'il(elle) est exécuté(e) par le processeur (401), mettant en œuvre les étapes du procédé d'obtention d'une fenêtre de détection selon l'une quelconque des revendication s 1 à 13.

15. Support de stockage lisible par ordinateur, stockant un programme, le programme, lorsqu'il est exécuté par un processeur d'un terminal, amène le terminal à mettre en œuvre les étapes du procédé d'obtention d'une fenêtre de détection selon l'une quelconque des revendication s 1 à 13.

Start

Obtain a second resource
sensing window according
to a resource selection
window

102

Obtain a first resource
sensing window according
to at least one stride P

101

End

FIG. 1

n

n-T0                              n-T$_{proc, 0}$      n+T1  n+T2       t（ms)

FIG. 2

Apparatus for obtaining a sensing window

First obtaining module                301

300

Second obtaining module               302

FIG. 3

400
Terminal

401                                402

Memory                    Processor

FIG. 4

500

501 — Radio frequency unit

Network module — 502

510

509 — Memory
Application program
Operating system

Audio output unit — 503

504
Input unit
Graphics processing unit — 5041
Microphone — 5042

508 — Interface unit

Processor

507
User input unit
5071 — Touch panel
5072 — Another input device

506
Display unit — 5061
Display panel

Sensor — 505

FIG. 5

**REFERENCES CITED IN THE DESCRIPTION**

**Patent documents cited in the description**

- WO 2020088678 A1
- US 2020029245 A1

- WO 2018030825 A1